Europäisches Patentamt

European Patent Office

Office européen des brevets

(19)

(11) **EP 1 381 196 A1**

(12) **EUROPEAN PATENT APPLICATION**

(43) Date of publication:
**14.01.2004 Bulletin 2004/03**

(51) Int Cl.$^7$: **H04L 27/26**

(21) Application number: **03015382.9**

(22) Date of filing: **08.07.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | • **Ryu, Heung-Gyooun**<br>**Paldal-gu, Suwon-city, Kyungki-do (KR)**<br>• **Yun, Sung-Ryul**<br>**Paldal-gu, Suwon-city, Kyungki-do (KR)**<br>• **Seo, Dong-Kyu**<br>**Paldal-gu, Suwon-city, Kyungki-do (KR)** |
| (30) Priority: **08.07.2002 KR 2002039482** | |
| (71) Applicant: **SAMSUNG ELECTRONICS CO., LTD.**<br>**Suwon-City, Kyungki-do (KR)** | (74) Representative: **Grünecker, Kinkeldey,**<br>**Stockmair & Schwanhäusser Anwaltssozietät**<br>**Maximilianstrasse 58**<br>**80538 München (DE)** |
| (72) Inventors:<br>• **Jung, Ki-Ho**<br>**Paldal-gu, Suwon-city, Kyungki-do (KR)** | |

(54) **Apparatus and method for transmitting and receiving side information about selective mapping in an orthogonal frequency division multiplexing communication system**

(57)     An apparatus and method for transmitting and receiving data having a smallest PAPR in an SLM scheme for PAPR reduction in an OFDM communication system using multiple carriers. To transmit the data having the smallest PAPR, input symbol sequences are duplicated to a plurality of data blocks. Phase-rotated data blocks are generated by multiplying the plurality of data blocks by different phase sequences. Side information for identifying the phase-rotated data blocks is inserted into a predetermined t position of the phase-rotated data blocks. IFFT is performed on the data blocks containing the side information. The data block having the smallest PAPR is selected among the inverse fast Fourier transformed data blocks.

FIG.2

EP 1 381 196 A1

**Description**

**BACKGROUND OF THE INVENTION**

1. Field of the Invention

The present invention relates generally to an OFDM (Orthogonal Frequency Division Multiplexing) communication system, and in particular, to an apparatus and method for transmitting and receiving data using a selective mapping (SLM) scheme to reduce a peak-to-average power ratio (PAPR).

2. Description of the Related Art

OFDM ensures high spectral efficiency since it is the principle of transmitting data in parallel on densely spacing sub-carriers with overlapping spectra. Modulation is carried out by IFFT (Inverse Fast Fourier Transform) and demodulation, by FFT (Fast Fourier Transform) in the OFDM technique.

The operations of a transmitter and a receiver in an OFDM wireless communication system will be described briefly below.

An OFDM transmitter modulates input data over sub-carriers after scrambling, encoding, and interleaving, and offers a variable data rate. According to the data rate, a coding rate, an interleaver size, and a modulation scheme are determined. In general, a coding rate of 1/2 or 3/4 is used and the interleaver size depends on the number of coded bits per OFDM symbol. For modulation, QPSK (Quadrature Phase Shift Keying), 8PSK (8ary PSK), 16QAM (16ary Quadrature Amplitude Modulation), or 64QAM (64ary QAM) is adopted according to the required data rate. A predetermined number of pilots are added to another predetermined number of sub-carriers. An IFFT block then takes the sub-carriers and pilots as its input and produces an OFDM signal. Guard intervals are inserted into the OFDM signal to eliminate inter-symbol interference (ISI) in a multi-path channel environment. Thereafter, OFDM waveforms are generated in a signal waveform generator and eventually transmitted on a radio channel from an RF (Radio Frequency) module.

Except for additional synchronization, the OFDM receiver demodulates in the reverse order to the operation of the transmitter. First, frequency offset and symbol offset are estimated using predetermined training symbols. Data symbols from which guard intervals are eliminated are then recovered by FFT to a predetermined number of sub-carriers containing a predetermined number of pilots. An equalizer estimates channel conditions and removes channel-caused signal distortion from the received signal in order to combat multi-path delay. The data of which the channel response has been compensated in the equalizer is converted to a bit stream and deinterleaved. After decoding and descrambling, the data is recovered to the original data.

Instead of transmitting data on a single carrier at high rate, OFDM divides the data into parallel data streams and transmits them in parallel on multiple carriers at low rate in the OFDM technology. Thus, OFDM enables efficient digital implementation of a modulator/demodulator and is robust against frequency-selective fading or narrow band interference. Due to these advantages, OFDM is suited for high-rate data transmission as adopted as the standards of the present European digital broadcast services and as the IEEE 802.11a and IEEE 802.16 standards.

In view of data transmission on multiple carriers, the amplitude of an OFDM signal is represented by a sum of the amplitudes of the carriers. If the carriers are in phase with each other, the OFDM signal has a very high PAPR. Such an OFDM signal lowers the efficiency of a high-power linear amplifier and operates a high-power amplifier in a non-linear region, thereby introducing inter-modulation distortion and spectrum regrowth among the carriers. Consequently, many studies have been conducted on PAPR reduction for OFDM systems.

The PAPR reduction methods include clipping, block coding, and phase adjustment. Clipping is a scheme of limiting a maximum amplitude of an input signal to a desirable maximum amplitude. It reduces PAPR easily. However, clipping causes in-band distortion due to non-linear operation, increases BER (Bit Error Rate), and introduces out-band clipping noise. Therefore, adjacent channel interference is generated.

Block coding is performed on an extra carrier to reduce the PAPR of entire carriers. This scheme achieves both error correction and PAPR reduction without signal distortion. However, if the sub-carrier bandwidth is large, the spectral efficiency is very poor and the size of a look-up table or a generation matrix becomes too great. As a result, the block coding is very complicated and requires a large volume of computation.

Finally, a phase adjustment is performed using a selective mapping (SLM) scheme or partial transmit sequence (PTS). The PTS is a flexible scheme of reducing PAPR without non-linear distortion. Input data is divided into M sub-blocks and after L-point IFFT, each sub-block is multiplied by a phase factor that minimizes PAPR. The products are summed prior to transmission. Despite the advantage, the PTS needs as many IFFTs as the number (M) of sub-blocks, and as the number of sub-blocks increases, the volume of computation required to calculate the phase factors becomes enormous. Consequently, high-rate information transmission is prohibitive.

Alternatively, the SLM scheme multiplies M identical data blocks by different phase sequences of length N and selects the product with the lowest PAPR, for transmission. This scheme requires M IFFT operations, but advantageously reduces PAPR remarkably and does not limit the number of carriers.

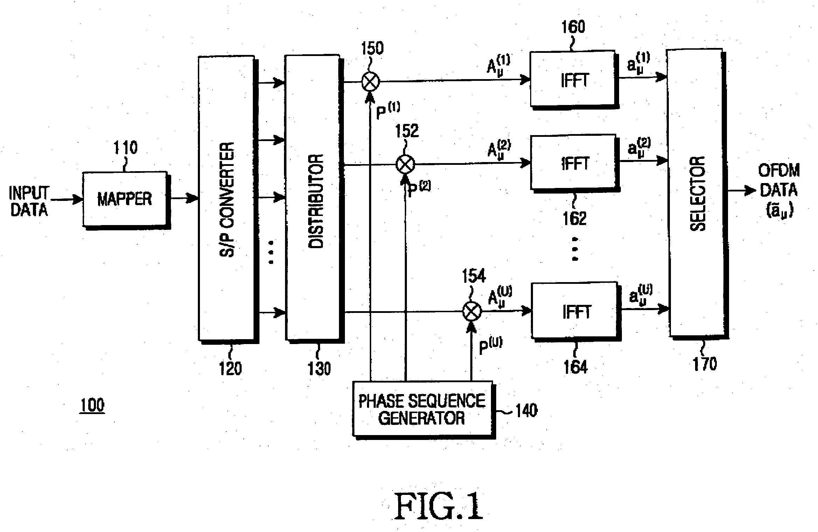

FIG. 1 is a block diagram of an SLM transmitter in a conventional OFDM system. As illustrated in FIG. 1, an SLM transmitter 100 is comprised of a mapper 110, a serial-to-parallel (S/P) converter 120, a distributor 130, a phase sequence generator 140, a plurality of multipliers 150 to 154, a plurality of IFFTs 160 to 164, and a selector 170.

Referring to FIG. 1, after encoding at a predetermined coding rate and interleaving, information to be transmitted is applied to the mapper 110. Though data can be encoded in many ways, the most common type of coding is turbo coding for error correction. The coding rate can be 1/2 or 3/4. The mapper 110 maps the input data to modulation symbols according to a preset modulation scheme. The S/P converter 120 converts sequential symbols received from the mapper 110 to L parallel symbols according to the number of input taps (L points) in the IFFTs 160 to 164. The distributor 130 duplicates the parallel symbols to U data blocks for the U IFFTs 160 to 164 and sends the data blocks to the multipliers 150 to 154.

The phase sequence generator 140 provides statistically independent U phase sequences of length N to the multipliers 150 to 154. The phase sequences are used to adjust the phase of the input data. The multipliers 150 to 154 multiply the data received from the distributor 130 by the different phase sequences received from the phase sequence generator 140.

The IFFTs 160 to 164 perform IFFT on the outputs of the multipliers 150 to 154 and the selector 170 selects the IFFT output with the smallest PAPR among the outputs of the IFFTs 160 to 164.

As illustrated in FIG. 1, the SLM advantageously reduces the PAPR and is applicable irrespective of the number of carriers although it requires the U IFFT operations. Moreover, as compared to the PTS, the volume of computation is not large and computation time is not long. Therefore, the SLM is favorable for high-rate information transmission.

However, the distinctive shortcoming of the SLM is that the chosen phase sequence must be known by a receiver to enable the receiver to recover the data. Thus, there is a need for methods of effectively transmitting the phase sequence selection information to achieve the SLM in the OFDM system.

## SUMMARY OF THE INVENTION

It is, therefore, an object of the present invention to provide a transmitting and receiving apparatus and method for effectively reducing PAPR without signal distortion in an OFDM wireless communication system.

It is another object of the present invention to provide a transmitting and receiving apparatus and method for effectively reducing PAPR without signal distortion using an SLM in an OFDM wireless communication system.

It is a further object of the present invention to provide an apparatus and method for transmitting side information about a phase sequence selected for PAPR reduction in an OFDM wireless communication system.

It is still another object of the present invention to provide an apparatus and method for receiving side information about a phase sequence selected for PAPR reduction in an OFDM wireless communication system.

It is yet another object of the present invention to provide an apparatus and method for receiving side information about a phase sequence selected for PAPR reduction and recovering information data using the side information in an OFDM wireless communication system.

The above and other objects of the present invention are achieved by an apparatus and method for transmitting and receiving a data block having a smallest PAPR in an SLM scheme for PAPR reduction in an OFDM communication system using multiple carriers.

According to one aspect of the present invention, in a method of transmitting a data block having a smallest PAPR in an SLM scheme for PAPR reduction in an OFDM transmitter that transmits data using multiple carriers, an input symbol sequence is duplicated to a plurality of the data blocks. Phase-rotated data blocks are generated by multiplying the plurality of data blocks by different phase sequences. Side information identifying the phase-rotated data blocks is inserted into a predetermined position of the phase-rotated data blocks. IFFT is performed on the data blocks containing the side information, and the data block having the smallest PAPR is selected among the inverse fast Fourier transformed data blocks.

According to another aspect of the present invention, in a method of receiving a data block having a smallest PAPR in an SLM scheme for PAPR reduction in an OFDM communication system that transmits data using multiple carriers, FFT is performed on symbol data received on the multiple carriers and outputting a data block comprising the FFT symbols. Side information is detected from a predetermined position of the data block. An inversion of a phase sequence corresponding to the detected side information is generated and multiplied by the data block.

According to a further aspect of the present invention, in an apparatus for transmitting a data block having a smallest PAPR in an SLM scheme for PAPR reduction in an OFDM transmitter that transmits data using multiple carriers, a distributor duplicates an input symbol sequence to a plurality of the data blocks, a phase sequence and side information generator generates different phase sequences for the plurality of data blocks and side information matching each of the phase sequences, for identifying the respective phase sequences, a multiplier generates phase-rotated data blocks by multiplying the plurality of data blocks by the phase sequences, a side information inserter inserts the side information identifying the phase-rotated data blocks into a predetermined position of the phase-rotated data blocks, an IFFT unit performs IFFT on the data blocks containing the side information, and a selector selects a data block having the smallest PAPR among the inverse fast Fourier transformed data blocks.

According to still another aspect of the present invention, in a method of receiving a data block having a smallest PAPR in an SLM scheme for PAPR reduction in an OFDM communication system that transmits data using multiple carriers, an FFT unit performs FFT on symbol data received on the multiple carriers and outputs a data block comprising the FFT symbols parallel to serial converting the fast Fourier transformed data to a data block, a side information detector detects side information from a predetermined position of the data block, and a phase sequence generator generates an inversion of a phase sequence corresponding to the detected side information and multiplies the data block by the inverted phase sequence.

**BRIEF DESCRIPTION OF THE DRAWINGS**

The above and other objects, features, and advantages of the present invention will become more apparent from the following detailed description when taken in conjunction with the accompanying drawings in which:

FIG. 1 is a block diagram of an SLM transmitter in a conventional OFDM system;
FIG. 2 is a block diagram of an SLM transmitter in an OFDM system according to the present invention;
FIG. 3 is a block diagram of an SLM receiver in an OFDM system according to the present invention;
FIG. 4 is a graph illustrating a comparison in terms of BER performance between transmission of additional SLM information and non-transmission of additional SLM information;
FIG. 5 is a graph illustrating a comparison in terms of PAPR reduction between the inventive SLM and conventional SLM when Shapiro-Rudin phase sequences are used;
FIG. 6 is a graph illustrating a comparison in terms of PAPR reduction between the inventive SLM and the conventional SLM when pseudo-random phase sequences are used;
FIG. 7 is a graph illustrating a comparison in terms of PAPR reduction between the inventive SLM and the conventional SLM when Newman phase sequences are used;
FIG. 8 is a graph illustrating PAPRs for different thresholds when a number of blocks (U) is 4;
FIG. 9 is a graph illustrating PAPRs for different thresholds when U=8; and
FIG. 10 is a graph illustrating PAPRs for different thresholds when U=16.

**DETAILED DESCRIPTION OF THE PREFERRED EMBODIMENT**

A preferred embodiment of the present invention will be described herein below with reference to the accompanying drawings. In the following description, well-known functions or constructions are not described in detail since they would obscure the invention in unnecessary detail.

A detailed description will be made hereinafter of an apparatus and method for reducing PAPR with an original signal maintained in an OFDM wireless communication system according to an embodiment of the present invention. The apparatus and method transmit/receive side information about a phase sequence in the OFDM system adopting the SLM scheme. Specifically, the additional phase sequence information(the side information) is inserted into transmission data.

While specific details such as OFDM modulation, IFFT, FFT, spectral efficiency, and BER are given for comprehensive understanding of the present invention, it is obvious to those skilled in the art that the present invention is readily implemented without those details or with modifications to them.

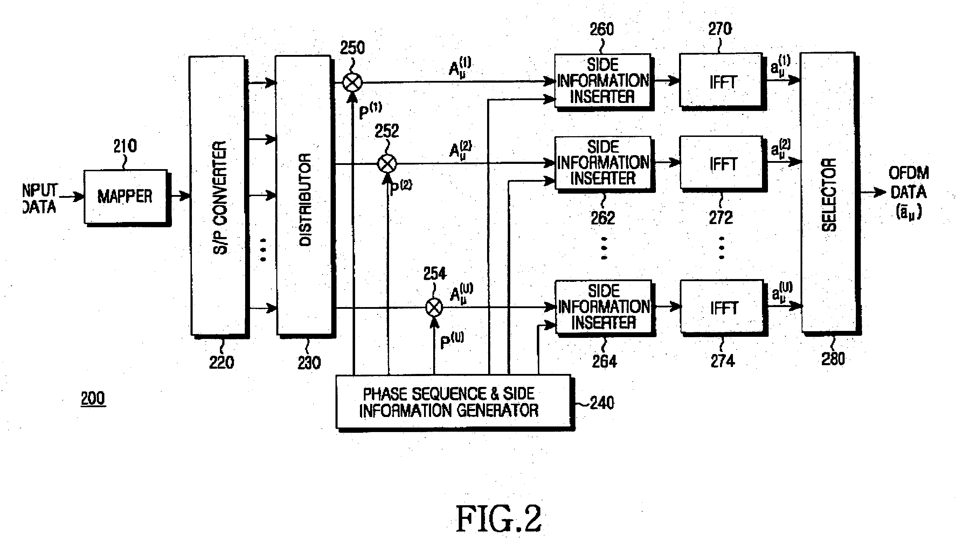

FIG. 2 is a block diagram of an SLM transmitter in an OFDM system according to the present invention. An SLM transmitter 200 is comprised of a mapper 210, an S/P converter 220, a distributor 230, a phase sequence & side information generator 240, a plurality of multipliers 250 to 254, a plurality of side information inserters 260 to 264, a plurality of IFFTs 270 to 274, and a selector 280.

Referring to FIG. 2, after encoding at a predetermined coding rate and interleaving, input data $A_\mu$ is applied to the mapper 210. Though data can be encoded in many ways, the most common type of coding is turbo coding for error correction. The coding rate can be 1/2 or 3/4.

The mapper 210 maps the input data $A_\mu$ to modulation symbols according to a preset modulation scheme. The S/P converter 220 converts sequential symbols received from the mapper 210 to parallel symbols. The distributor 230 duplicates the parallel symbols U data blocks for the U IFFTs 260 to 264 and sends the data blocks to the multipliers 250 to 254. Each data block contains a plurality of symbols and is simultaneously outputted in parallel.

The phase sequence & side information generator 240 provides statistically independent U phase sequences of length N to the multipliers 250 to 254 and identifiers (IDs) identifying the phase sequences as side information to the side information inserters 260 to 264. The phase sequences are used to adjust the phase of the input data, and the phase sequence IDs are types of indexes having length $\log_2 U$ bits.

The multipliers 250 to 254 multiply the data received from the distributor 230 by the different phase sequences received from the phase sequence & side information generator 240, thereby rotating the phases of the data blocks. The U phase-rotated data blocks are denoted by $A_\mu^{(1)}$ to $A_\mu^{(U)}$. The side information inserters 260 to 264 inserts the phase sequence IDs before or after the phase-rotated data blocks. In other words, the side information provides information about the phase rotations. The TFFTs 270 to 274 perform IFFT on the outputs of the side information inserters 260 to 264. The inverse fast Fourier transformed data blocks are denoted by $a_\mu^{(1)}$ to $a_\mu^{(U)}$.

Finally, the selector 280 computes the PAPRs of the inverse fast Fourier transformed data blocks and selects one inverse fast Fourier transformed data block with a smallest PAPR as an OFDM signal $\tilde{a}_\mu$ .

Exemplary phase sequences required to implement the present invention will be described referring to equations below.

Each of the parallel data blocks produced according to the number of carriers is expressed as

$$A_\mu = [A_{\mu,0}, ..., A_{\mu,N-1}] \tag{1}$$

where $A_{\mu,\upsilon}$ is a $\upsilon$th symbol and $A_\mu$ is a sub-carrier vector.

A u-th phase sequence $P^{(u)}$ among U phase sequences, which is a pseudo-random sequence of length N corresponding to an arbitrary value between 0 and $\pi$, is expressed as

$$P^{(u)} = e^{+j\phi_\nu^{(u)}}, \ (\phi_\nu^{(u)} \in \{x | 0 \le x \le 2\pi\}, \ 0 \le \nu \le (N-1), \ 1 \le u \le U)$$

$$P^{(u)} = [P_0^{(u)}, \ldots, P_{N-1}^{(u)}] \tag{2}$$

Aside from the pseudo-random phase sequences, Newman phase sequences and Shapiro-Rudin phase sequences are available. A Newman phase sequence is given by

$$\varphi_n = \frac{(n-1)^2 \pi}{N}, \quad \text{where } n = 1, 2, \ldots, N \tag{3}$$

where $\varphi_n$ is a phase offset multiplied by an nth sub-carrier and N is the length of an input data block equal to the number of sub-carriers.

A Shapiro-Rudin phase sequence comprises a seed sequence and an appended sequence. For each run, the appended sequence is constructed from the seed sequence with a duplicate of the first half and an inversion of the second half. The length of the Shapiro-Rudin phase sequence is increased by $2^{N-1}$ as the iteration factor increases.

Table 1 below illustrates exemplary Shapiro-Rudin phase sequence generation.

(Table 1)

| Iteration | Shapiro-Rudin String-k(1 1) |
|---|---|
| 0 | 1 1 |
| 1 | 1 1 1 -1 |
| 2 | 1 1 1 -1 1 1 -1 1 |
| 3 | 1 1 1 -1 1 1 -1 1 1 1 1 -1 -1 -1 1 -1 |

The sub-carrier vectors $A_\mu$ are multiplied by the U phase sequence vectors $P^{(u)}$, thereby producing U different sub-carrier vectors $A_\mu^{(u)}$.

$$A_{\mu,v}^{(u)} = A_{\mu,v} \cdot P_v^{(u)}, \ 0 \le v \le N\text{-}1, \ 1 \le u \le U \qquad (4)$$

where $A_{\mu,v}^{(u)}$ is a vth symbol whose phase has been rotated by a uth phase sequence $P_v^{(u)}$.

The side information about the SLM

$$SI^{(u)}, \ u = 1,2,....,U \qquad (5)$$

contains $\log_2 U$ bits and is inserted at the start or end of the phase-rotated data block since it should not be rotated by a phase sequence.

The U sub-carrier vectors including the side information are transformed to the time domain by IFFT. The IFFT symbols are expressed as

$$a_\mu^{(u)} = IFFT\{A_\mu^{(u)}\} \qquad (6)$$

An IFFT symbol $\tilde{a}_\mu$ having the smallest PAPR $\tilde{\mathfrak{T}}_\mu$ is selected and transmitted as an OFDM symbol.

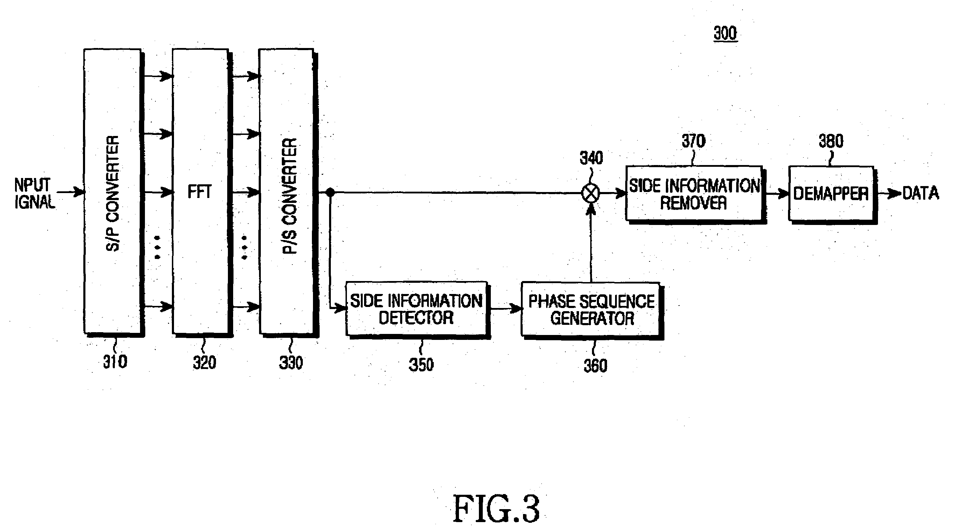

FIG. 3 is a block diagram of an SLM receiver in the OFDM system according to the present invention. An SLM receiver 300 is comprised of an S/P converter 310, an FFT 320, a parallel-to-serial (P/S) converter 330, a multiplier 340, an side information detector 350, a phase sequence generator 360, a side information remover 370, and a demapper 380.

Referring to FIG. 3, RF signals on a plurality of carriers are converted to digital baseband signals and applied as an input signal $\tilde{a}_\mu$ to the S/P converter 310 after a predetermined process for synchronization and noise elimination. The S/P converter 310 converts the input signal $\tilde{a}_\mu$ to L parallel signals on a symbol basis according to the number of the input taps (L points) of the FFT 320. The FFT 320 performs FFT on the parallel symbols. The P/S converter 330 converts the parallel FFT symbols to a serial data block $A_{\mu,v}^{(u)}$ of length L and outputs it to both the multiplier 340 and the side information detector 350.

The side information detector 350 detects side information from a predetermined position, that is, the start or end of the data block. The side information is an index of $\log_2 U$ bits, indicating a phase sequence used for the phase rotation of the data block. The phase sequence generator 360 generates the inverted one of the phase sequence corresponding to the index.

The multiplier 340 multiplies the received data block by the inverted phase sequence. The side information remover 370 removes the side information from the output of the multiplier 340. The demapper 380 demaps the output of the side information remover 370 according to a predetermined modulation scheme, thereby recovering the original data.

Meanwhile, the side information remover 370 may operate at the front end of the multiplier 340. That is, the side information is removed from the data block, followed by multiplication by the inverted phase sequence.

Herein below, the effects of accurate transmission and reception of the SLM side information on the system in the SML scheme for PAPR reduction will be described.

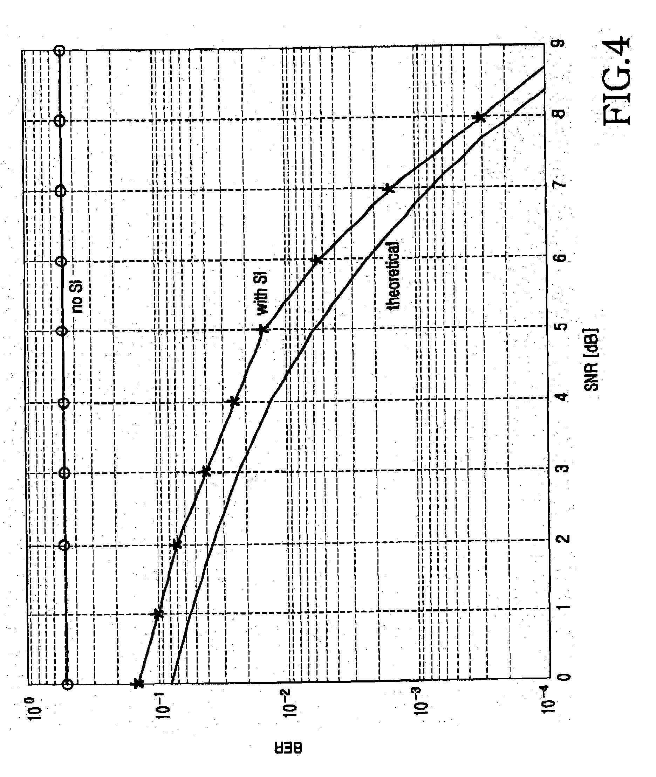

FIG. 4 is a graph illustrating a comparison in terms of BER between a case of SLM side information transmission and a case of non-SLM side information transmission. BPSK is adopted as a modulation scheme, N=32, and U=4.

Referring to FIG. 4, when the SLM receiver does not receive the SLM side information, its BER performance, as indicated by "no SI", is bad irrespective of signal-to-noise ratio (SNR) because it cannot recover input data reliably. On the other hand, when the SLM receiver receives the SML side information, its BER performance, as indicated by "with SI", is lower than that of a theoretical BPSK receiver, as indicated by theoretical, by about 0.5dB at BER=$10^{-4}$. Errors in the side information account for the BER performance degradation. Therefore, the BER performance degradation can be prevented by using FEC (Forward Error Correction) coding.

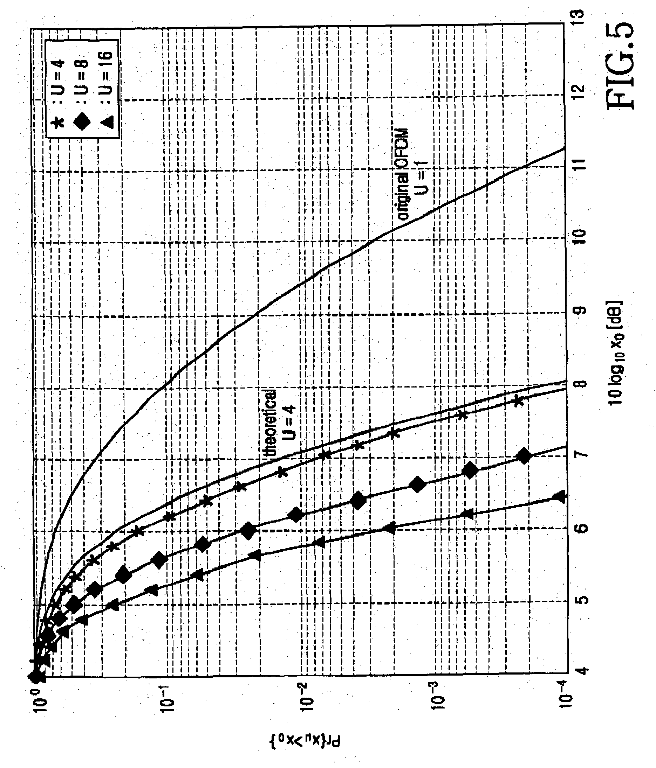

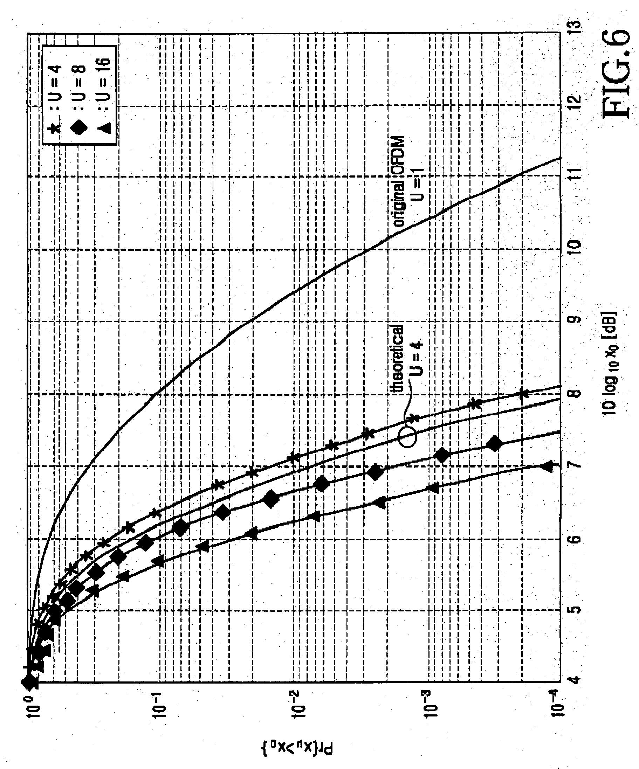

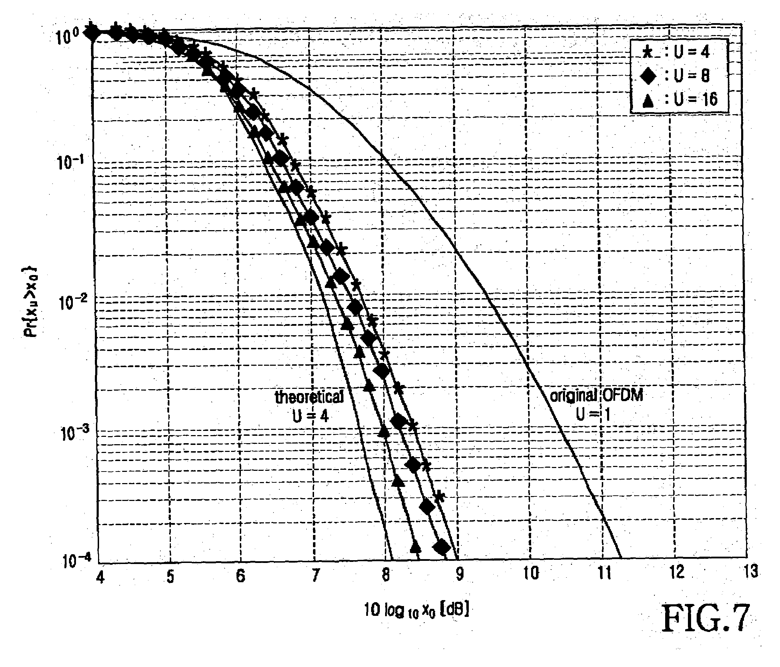

FIGS. 5, 6, and 7 are CCDF (Complementary Cumulative Distribution Function) graphs illustrating comparisons in term of PAPR reduction between the inventive SLM (theoretical, U-4, 8, 16) and conventional SLM (original OFDM, U=1) when Shapiro-Rudin phase sequences, pseudo-random phase sequences, and Newman phase sequences are used, respectively. N=32 for each phase sequence. For the pseudo-random phase sequences, random sequences $\mathbf{P_u}^{(\mu)} \in \{\pm 1, \pm j\}$ are generated for simulation.

Table 2 below illustrates PAPR reduction performances for the three phase sequences.

(Table 2)

| U CCDF | | 1 | 4 | | 16 |
|---|---|---|---|---|---|
| $10^{-3}$ | Shapiro-Rudin | 10.4 | 7.5 | 6.7 | 6.1 |
| | Pseudo-Random | 10.4 | 7.9 | | 6.8 |
| | Newman | 10.4 | 8.4 | | 8.0 |

As noted from Table 2, PAPR is reduced as U increases and the Shapiro-Rudin phase sequence has the best PAPR performance among the three phase sequences.

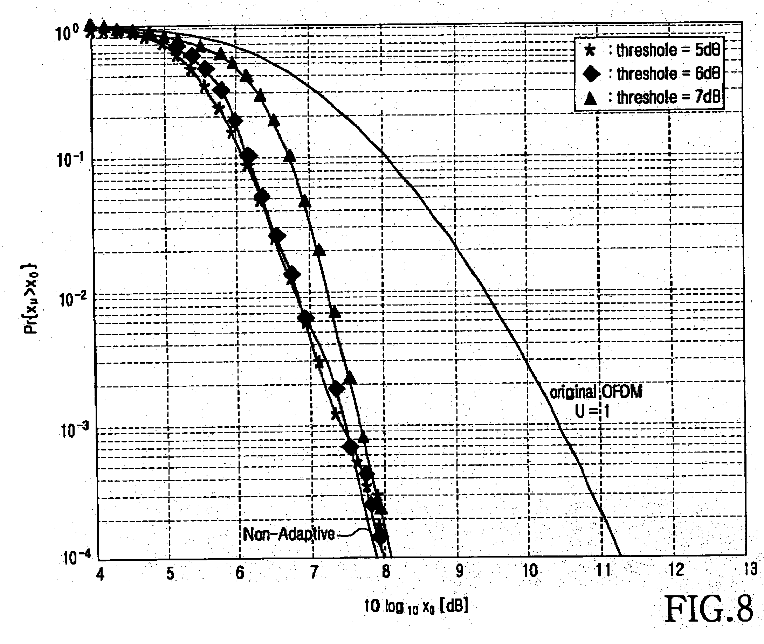

FIGs. 8, 9, and 10 are CCDF graphs illustrating PAPR reduction for different thresholds when U=4, 8, and 16, respectively. As illustrated, as U increases, PAPR becomes better. In the inventive adaptive SLM, some of the IFFT blocks are simply operated unless a threshold is set at too a low value. With respect of the volume of the conventional SLM computation as 100%, the computation volumes of the inventive adaptive SLM for different threshold are listed in Table 3 below,

(Table 3)

| U Threshold | 4 | 8 | |
|---|---|---|---|
| 5dB | 82.6% | 70.0% | 49.2% |
| 6dB | 52.4% | 28.4% | 15.8% |
| 7dB | 32.5% | 16.2% | |

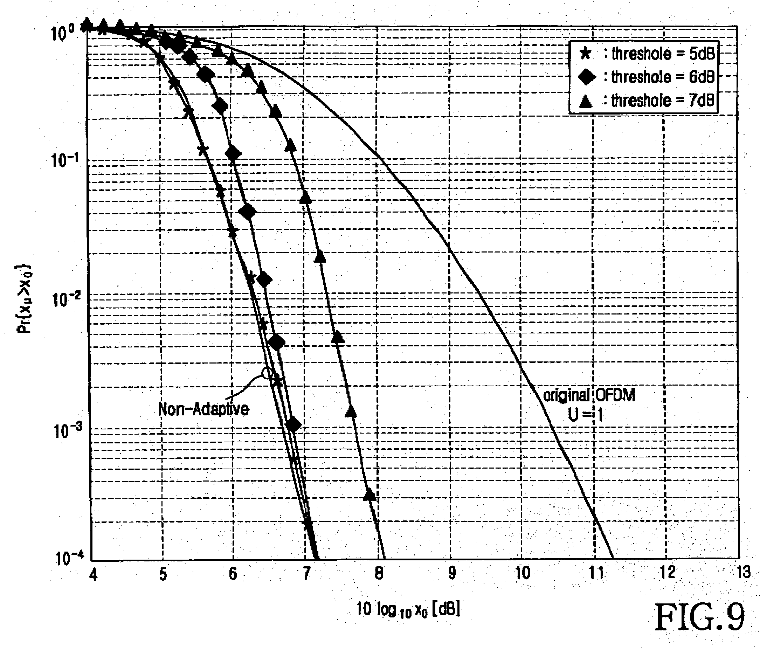

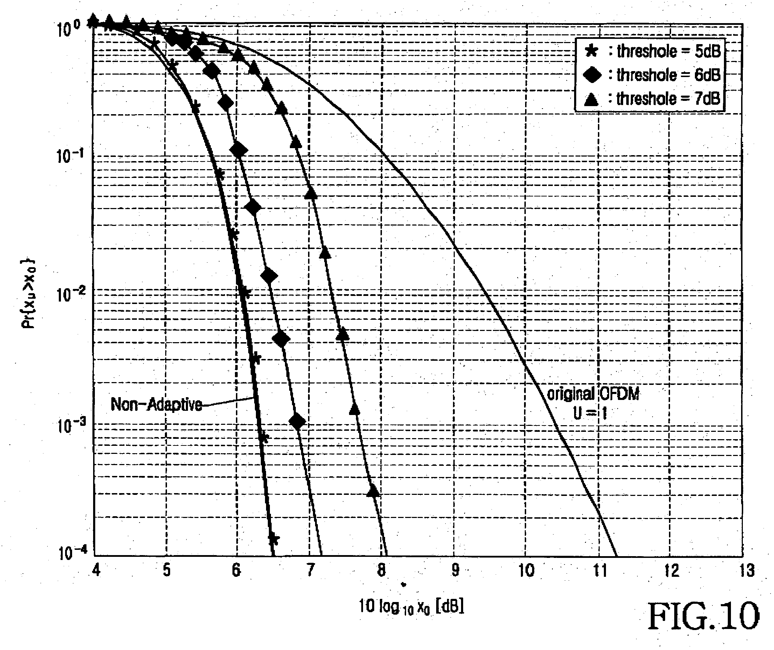

Referring to FIG. 8, when U =4 , CCDF performances is the same at 0.1% or below when the threshold is set to 5dB and 6dB. In this case, it is efficient to take a threshold of 6dB, considering the computation volume illustrated in Table 3. As illustrated in FIG. 9, also when U=8, CCDF performances are the same at 0.1% or below and thus the threshold is preferably set to 6dB. On the other hand, in FIG. 10, when U=16, the same performance as in the conventional SLM is obtained with the threshold of 5dB.

As the threshold is greater, the probability increases for a lower PAPR than the threshold. Thus, the computation volume is reduced but the CCDF performance is lower than that of the conventional SLM. With respect of the conventional SLM computation volume as 100%, the adaptive SLM requires about 52% when U=4, about 28% when U=8, and about 49% when U=16. In other words, the required computation volume for the adaptive SLM is reduced from the conventional SLM computation volume by 48% when U=4, 72% when U=8, and 51% when U=16.

In the SLM scheme of the present invention, as described above, high PAPR, which is the challenging issue for an OFDM communication system using multiple carriers, is reduced and transmission of side information enables a receiver to accurately recover information data. Moreover, the apparatus and method for transmitting and receiving side information are applicable irrespective of modulation schemes, can be implemented simply, and maintain PAPR reduction performance. Specifically, the capability of real-time transmission of the side information is useful to a very highspeed OFDM wireless communication system.

While the present invention has been shown and described with reference to a certain preferred embodiment thereof, it will be understood by those skilled in the art that various changes in form and details may be made therein without departing from the spirit and scope of the invention as defined by the appended claims.

## Claims

1. A method of transmitting a data block having a smallest peak-to-average power ratio (PAPR) in a selective mapping (SLM) scheme for PAPR reduction in an orthogonal frequency division multiplexing (OFDM) transmitter that transmits data using multiple carriers, the method comprising the steps of:

   duplicating an input symbol sequence to a plurality of data blocks;
   generating phase-rotated data blocks by multiplying the plurality of data blocks by different phase sequences;
   inserting side information for identifying the phase-rotated data blocks into a predetermined position of the phase-rotated data blocks ;
performing inverse fast Fourier transform (IFFT) on the phase-rotated data blocks containing the side information; and
selecting a data block having the smallest PAPR among the inverse fast Fourier transformed data blocks.

2. The method of claim 1, wherein the side information for each of the phase-rotated data blocks is an index indicating the phase sequence multiplied for the phase-rotated data block.

3. The method of claim 2, wherein the side information is composed of $\log_2 U$ bits to distinguish U phase sequences.

4. The method of claim 1, wherein the side information is inserted into a front portion of each of the phase-rotated data blocks containing a plurality of bits.

5. The method of claim 1, wherein the side information is inserted into an end portion of each of the phase-rotated data blocks containing a plurality of bits.

6. The method of claim 1, wherein the phase sequences are one of Shapiro-Rudin phase sequences, pseudo-random phase sequences, and Newman phase sequences.

7. A method of receiving a data block having a smallest peak-to-average power ratio (PAPR) in a selective mapping (SLM) scheme for PAPR reduction in an orthogonal frequency division multiplexing (OFDM) communication system that transmits data using multiple carriers, the method comprising the steps of:

   performing fast Fourier transform (FFT) on symbol data received on the multiple carriers, and outputting a data block comprising the FFT symbols;
   detecting side information from a predetermined position of the data block; and
   generating an inversion of a phase sequence corresponding to the detected side information and multiplying the data block by the inverted phase sequence.

8. The method of claim 7, further comprising the step of removing the side information after multiplying the data blocks by the inverted phase sequence.

9. The method of claim 7, further comprising the step of removing the side information before multiplying the data blocks by the inverted phase sequence.

10. The method of claim 7, wherein the side information is an index indicating the phase sequence.

11. The method of claim 10, wherein the side information is composed of $\log_2 U$ bits to distinguish U phase sequences.

12. The method of claim 7, wherein the side information is inserted in a front portion of the data block.

13. The method of claim 7, wherein the side information is inserted in an end portion of the FFT data blocks.

14. The method of claim 7, wherein the phase sequence is one of a Shapiro-Rudin phase sequence, a pseudo-random phase sequence, and a Newman phase sequence.

15. An apparatus for transmitting a data block having a smallest peak-to-average power ratio (PAPR) in a selective mapping (SLM) scheme for PAPR reduction in an orthogonal frequency division multiplexing (OFDM) transmitter that transmits data using multiple carriers, the apparatus comprising:

   a distributor for duplicating an input symbol sequence to a plurality of data blocks;
   a phase sequence and side information generator for generating different phase sequences for the plurality of data blocks and side information matching each of the phase sequences, for identifying the respective phase sequences;
   a multiplier for generating phase-rotated data blocks by multiplying the plurality of data blocks by the phase sequences;
   a side information inserter for inserting the side information for identifying the phase-rotated data blocks into a predetermined position of the phase-rotated data blocks;

an inverse fast Fourier transform (IFFT) unit for performing IFFT on the phase-rotated data blocks containing the side information; and

a selector for selecting a data block having the smallest PAPR among the inverse fast Fourier transformed data blocks.

16. The apparatus of claim 15, wherein the side information for each of the phase-rotated data blocks is an index indicating the phase sequence multiplied for the phase-rotated data block.

17. The apparatus of claim 16, wherein the side information is composed of $\log_2 U$ bits to distinguish U phase sequences.

18. The apparatus of claim 15, wherein the side information is inserted into a front portion of each of the phase-rotated data blocks containing a plurality of bits.

19. The apparatus of claim 15, wherein the side information is inserted into an end portion of each of the phase-rotated data blocks containing a plurality of bits.

20. The apparatus of claim 15, wherein the phase sequences are one of Shapiro-Rudin phase sequences, pseudo-random phase sequences, and Newman phase sequences.

21. An apparatus for receiving a data block having a smallest peak-to-average power ratio (PAPR) in a selective mapping (SLM) scheme for PAPR reduction in an orthogonal frequency division multiplexing (OFDM) communication system that transmits data using multiple carriers, the apparatus comprising:

a fast Fourier transform (FFT) unit for performing FFT on symbol data received on the multiple carriers, and outputting a data block comprising the FFT symbols;;

a side information detector for detecting side information from a predetermined position of the data block; and

a phase sequence generator for generating an inversion of a phase sequence corresponding to the detected side information and multiplying the data block by the inverted phase sequence.

22. The apparatus of claim 21, further comprising a side information remover for removing the side information from the FFT data blocks multiplied by the inverted phase sequence.

23. The apparatus of claim 21, further comprising a side information remover for removing the side information from the FFT data blocks.

24. The apparatus of claim 21, wherein the side information is an index indicating the phase sequence.

25. The apparatus of claim 24, wherein the side information is composed of $\log_2 U$ bits to distinguish U phase sequences.

26. The apparatus of claim 21, wherein the side information is inserted in a front portion of the FFT data blocks containing a plurality of bits.

27. The apparatus of claim 21, wherein the side information is inserted in an end portion of the FFT data blocks containing a plurality of bits.

28. The apparatus of claim 21, wherein the phase sequence is one of a Shapiro-Rudin phase sequence, a pseudo-random phase sequence, and a Newman phase sequence.

FIG.1

INPUT DATA → MAPPER (210) → S/P CONVERTER (220) → DISTRIBUTOR (230)

250: $\otimes$ $P^{(1)}$ → $A_\mu^{(1)}$ → SIDE INFORMATION INSERTER (260) → IFFT (270) → $a_\mu^{(1)}$ → SELECTOR (280) → OFDM DATA ($\bar{a}_\mu$)

252: $\otimes$ $P^{(2)}$ → $A_\mu^{(2)}$ → SIDE INFORMATION INSERTER (262) → IFFT (272) → $a_\mu^{(2)}$

254: $\otimes$ $P^{(U)}$ → $A_\mu^{(U)}$ → SIDE INFORMATION INSERTER (264) → IFFT (274) → $a_\mu^{(U)}$

PHASE SEQUENCE & SIDE INFORMATION GENERATOR (240)

200

FIG.2

EP 1 381 196 A1

FIG.3

FIG.4

EP 1 381 196 A1

FIG.5

14

FIG.6

EP 1 381 196 A1

FIG.7

EP 1 381 196 A1

FIG.8

EP 1 381 196 A1

FIG.9

FIG.10

EP 1 381 196 A1

**European Patent Office**

# EUROPEAN SEARCH REPORT

Application Number

EP 03 01 5382

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 125 103 A (BAEUML ROBERT ET AL) 26 September 2000 (2000-09-26) <br><br> * column 4, line 1 - line 61 * <br> * column 5, line 31 - line 55 * <br> * column 6, line 5 - line 14 * <br> * figure 1 * <br> * claims 1,5,6,12 * <br> --- | 1,2,4,5, 7-10,12, 13,15, 16,18, 19, 21-24, 26,27 | H04L27/26 |
| X | MULLER S H ET AL: "A comparison of peak power reduction schemes for OFDM" GLOBAL TELECOMMUNICATIONS CONFERENCE, 3 - 8 November 1997, pages 1-5, XP010254553 IEEE, NEW YORK, USA ISBN: 0-7803-4198-8 * Section 4.1. Selected Mapping * * Section 4.3. Redundancy * --- | 1-28 | |
| X | BREILING M ET AL: "Distortionless reduction of peak power without explicit side information" GLOBECOM '00 - IEEE. GLOBAL TELECOMMUNICATIONS CONFERENCE, 27 November 2000 (2000-11-27) - 1 December 2000 (2000-12-01), pages 1494-1498 vol.3, XP002257994 IEEE, Piscataway, NJ, USA, ISBN: 0-7803-6451-1 * page 1494, column 2, last paragraph - page 1495 * --- <br><br> -/-- | 1-28 | **TECHNICAL FIELDS SEARCHED (Int.Cl.7)** <br><br> H04L |

The present search report has been drawn up for all claims

| Place of search | Date of completion of the search | Examiner |
|---|---|---|
| THE HAGUE | 16 October 2003 | Moreno, M |

**European Patent Office**

## EUROPEAN SEARCH REPORT

Application Number

EP 03 01 5382

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MUELLER S H ET AL: "OFDM WITH REDUCED PEAK-TO-AVERAGE POWER RATIO BY MULTIPLE SIGNAL REPRESENTATION REDUCTION DU FACTEUR DE CRETE EN OFDM PAR REPRESENTATION MULTIPLE DU SIGNAL" ANNALES DES TELECOMMUNICATIONS - ANNALS OF TELECOMMUNICATIONS, PRESSES POLYTECHNIQUES ET UNIVERSITAIRES ROMANDES, vol. 52, no. 1/2, February 1997 (1997-02), pages 58-67, XP000991143 Lausanne, CH ISSN: 0003-4347 * page 62, column 1, paragraph 1 - column 2 * | 1-3,7, 10,11, 15-17, 21,24,25 | |
| X | JAYALATH A D S ET AL: "REDUCED COMPLEXITY PTS AND NEW PHASE SEQUENCES FOR SLM TO REDUCE PAP OF AN OFDM SIGNAL" VTC 2000-SPRING. 2000 IEEE 51ST. VEHICULAR TECHNOLOGY CONFERENCE PROCEEDINGS, vol. 3 OF 3. CONF. 51, 15 - 18 May 2000, pages 1914-1917, XP000968337 IEEE, Piscataway, NJ, USA ISBN: 0-7803-5719-1 * page 1916, column 1 * | 1,6,15, 20 | |

TECHNICAL FIELDS SEARCHED (Int.Cl.7)

The present search report has been drawn up for all claims

| Place of search | Date of completion of the search | Examiner |
|---|---|---|
| THE HAGUE | 16 October 2003 | Moreno, M |

EPO FORM 1503 03.82 (P04C01)

EP 1 381 196 A1

## ANNEX TO THE EUROPEAN SEARCH REPORT
## ON EUROPEAN PATENT APPLICATION NO.

EP 03 01 5382

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2003

| Patent document cited in search report | | Publication date | Patent family member(s) | | Publication date |
|---|---|---|---|---|---|
| US 6125103 | A | 26-09-2000 | DE | 19635813 A1 | 05-03-1998 |
| | | | AU | 4620197 A | 26-03-1998 |
| | | | CN | 1244323 A | 09-02-2000 |
| | | | WO | 9810567 A1 | 12-03-1998 |
| | | | EP | 0925672 A1 | 30-06-1999 |
| | | | JP | 2000517500 T | 26-12-2000 |

EPO FORM P0459

For more details about this annex : see Official Journal of the European Patent Office, No. 12/82

22